# EUROPEAN PATENT APPLICATION

(11) **EP 4 030 309 A1**
(43) Date of publication of application: **20.07.2022**
(21) Application number: 21198559.3
(22) Date of filing: 23.09.2021
(51) Int. Cl.: G06F 16/11

(54) **MANAGEMENT COMPUTER AND DATA MANAGEMENT METHOD BY MANAGEMENT COMPUTER**

(30) Priority: 13.01.2021 JP 2021003360
(71) Applicant: Hitachi, Ltd., Tokyo 100-8280 (JP)
(72) Inventor: KANEKO, Satoshi, Tokyo, 100-8280 (JP)
(74) Representative: MERH-IP Matias Erny Reichl Hoffmann Patentanwälte PartG mbB

(57) **Abstract**

The processor of the management server coupled to a data management server and the like accessed from a client server, IT resources, and public cloud resources in which data are stored, is configured to identify a relation among a data user that uses the data, the data, and the IT resources on the basis of data management information in the public cloud resources and IT infrastructure management information in the IT resources, and present the identified relation to the client server.

## Description

### CROSS-REFERENCE TO PRIOR APPLICATION

This application relates to and claim the benefit of priority from Japanese Patent Application No. 2021-3360 filed on January. 13, 2021 the entire disclosure of which is incorporated herein by reference.

### BACKGROUND

The present invention relates to a management computer and a data management method by the management computer.

The present invention preferably relates to a management computer used in a computer system including a server and a storage apparatus, and particularly relates to a management technique of an IT system in an environment where the management computer monitors the server and the storage apparatus.

Mainly, among financial and public corporations, for reasons of legal regulations or putting data under their own control, , a storage configuration (referred to as a hybrid configuration, hereinafter) has been used in which data are placed in a co-location-type data center (DC) in the vicinity of a public cloud and are used directly from the public cloud. Even in such storage configuration, it is required that a data usage status, such as where and how the data are being used, be ascertained at all times so that the usage status can be reported promptly and a data delete command can be dealt with promptly in order to comply with the regulations.

In particular, data management is becoming increasingly important in the EU in conjunction with the enforcement of the General Data Protection Regulation (GDPR). In response to such regulations on data storage locations, U.S. Patent Application Publication No. 2018/0336361 (Specification) discloses a technique for managing the data storage locations in a public cloud on a region-by-region basis in the public cloud and controlling data storage to satisfy the conditions of the data storage locations. According to the technique described in U.S. Patent Application Publication No. 2018/0336361 (Specification), although the impact on data regulations associated with data processing operations on the public cloud can be curbed, the technique cannot be applied to the case where a company maintains its own IT environment in its own DC or co-location-type DC.

### SUMMARY

Conventionally, a storage area (referred to as a volume, hereinafter) in a storage apparatus owned by a user has been managed by storage management software, but the storage management software does not manage what kinds of data are stored in the volume. Moreover, in some cases, the data are copied to a storage area different from the volume by the server or a computational resource such as a virtual machine, and some data are processed and stored in an arbitrary storage area, but updating the locations of the data associated with these data processings cannot be managed.

Public cloud cloud services, on the other hand, do not manage IT resources such as servers and storages outside the public cloud. Therefore, in the hybrid configuration described above, even in a case where data communication is present between the cloud service in the public cloud and the IT resource in the DC of the company, the cloud service cannot ascertain the status of the data communication.

Therefore, it has conventionally been difficult to ascertain the usage status of data in an on-premises storage from the public cloud in the hybrid configuration. As a result, in the hybrid configuration, in a case where the volume or physical drive, on which the data are saved, needs to be destroyed in response to a data delete command, it is difficult to identify the volume and the drive.

The present invention has been made in view of the foregoing circumstances, and an object thereof is to provide a management computer capable of promptly ascertaining a usage status of data in a storage apparatus having a hybrid configuration, and a data management method used by the management computer.

In order to achieve the foregoing object, a management computer according to one aspect of the present invention is a management computer coupled to a host computer accessed from a client, an IT infrastructure, and a first storage apparatus in which data are stored, wherein the management computer includes a processor, and the processor is configured to identify a relation among a data user that uses the data, the data, and the IT infrastructure on the basis of data management information in the first storage apparatus and IT infrastructure management information in the IT infrastructure, and present the identified relation to the client.

According to the present invention, the usage status of data in a storage device having a hybrid configuration can be ascertained promptly.

### BRIEF DESCRIPTION OF THE DRAWINGS

FIG. 1 is a diagram showing an overall configuration of a computer system according to an embodiment;
FIG. 2 is a diagram showing a logical configuration of a management server of the computer system according to the embodiment;
FIG. 3 is a diagram showing an example of a data relation
table of the management server according to the embodiment;
FIG. 4 is a diagram showing an example of an application relation table of the management server according to the embodiment;
FIG. 5 is a diagram showing an example of a storage relation table of the management server according to the embodiment;
FIG. 6 is a diagram showing an example of a mapping table of the management server according to the embodiment;
FIG. 7 is a diagram showing an example of an asset table of the management server according to the embodiment;
FIG. 8 is a diagram showing an example of a data management policy table of the management server according to the embodiment;
FIG. 9 is a diagram showing an example of an action rule table of the management server according to the embodiment;
FIG. 10 is a flowchart showing an operation executed by an IT infrastructure recommendation program of the management server according to the embodiment; and
FIG. 11 is a diagram showing a GUI showing a data relation out of GUIs displayed by the management server according to the embodiment.

### DETAILED DESCRIPTION OF THE EMBODIMENT

An embodiment of the present invention is now described hereinafter with reference to the drawings. It should be noted that the following embodiment does not limit the present invention according to the claims, and that all of the elements and combinations thereof described in the embodiment are not necessarily essential for the means for solution of the present invention.

In the following description, "memory" refers to one or more memories and may typically be a main storage device. At least one memory in a memory unit may be a volatile memory or a nonvolatile memory.

Also, in the following description, "processor" refers to one or more processors. At least one processor is typically a microprocessor such as a CPU (Central Processing Unit), but may be other types of processors such as a GPU (Graphics Processing Unit). At least one processor may be a single-core processor or a multi-core processor.

Also, at least one processor may be a processor in a broad sense, such as a hardware circuit (e.g., a FPGA (Field-Programmable Gate Array) or an ASIC (Application Specific Integrated Circuit)) that executes part of or an entire processing.

In the present disclosure, a storage device includes one storage drive such as one HDD (Hard Disk Drive) or a SSD (Solid State Drive), a RAID apparatus including a plurality of storage drives, and a plurality of the RAID apparatuses. In addition, in a case where the drive is a HDD, the HDD may include, for example, a SAS (Serial Attached SCSI) HDD or a NL-SAS (Near Line SAS) HDD.

Note that, in the following description, various pieces of information are described by using such an expression as "aaa table." However, the various pieces of information may be expressed using data structures other than tables. In order to illustrate that the various pieces of information do not depend on data structures, "aaa table" can be referred to as "aaa information."

Also, in the following description, the configuration of each table is an example; one table may be divided into two or more tables, and all or part of two or more tables may be configured as one table.

Furthermore, in the following description, processings are often described simply using a storage management computer, a host computer, or a host management computer as the subject, which means that these processings are executed by the processors of control devices provided in the computer. Similarly, when simply describing the processings using a storage apparatus as the subject, it means that a controller provided in the storage apparatus executes the processings. In addition, at least either the control device or the controller may be a processor itself, or may include the hardware circuit that executes part or or an entire processing performed by the control device or the controller. A program may be installed from a program source onto each computer or the storage device. The program source may be, for example, a program distribution server or a storage medium.

Also, in the following description, IDs are used as identification information of the elements, but other types of identification information may be used in place of or in addition to the IDs.

Moreover, in the following description, when the same elements are not distinguished from one another, reference numerals (or common numerals out of the reference numerals) are used, and when the same elements are distinguished from one another, identification numbers (or reference numerals) of the elements are used.

The present embodiment discloses a method in which an IT infrastructure recommendation program 2470 suggests configuration and operations of data services or IT infrastructures in order to comply with a data management policy. Similarly, the present embodiment also discloses an example in which a visualization program 2475 makes data relations visible.

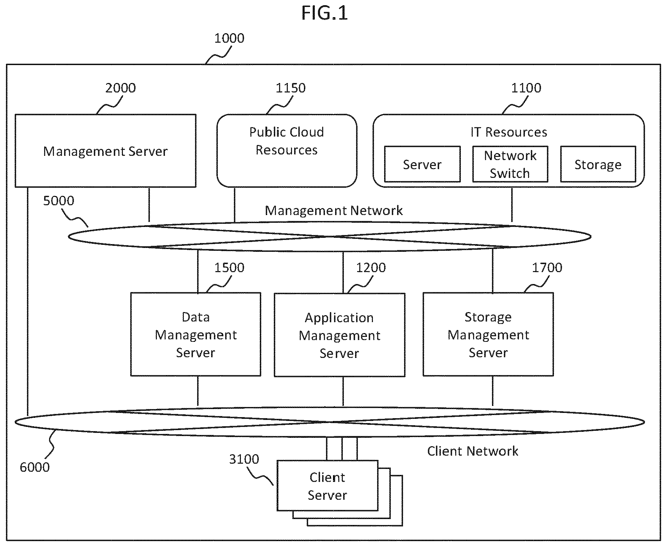

FIG. 1 shows an overall configuration of a computer system according to the embodiment. An IT environment (computer System) 1000 includes a management server 2000, a client server 3100, an application management server 1200, a data management server 1500, a storage management server 1700, IT resources 1100, public cloud resources 1150, a management network 5000, and a client network 6000.

The IT resources 1100 represent IT resources such as a server, a network switch, and a storage. The public cloud resources 1150 include IT resources such as virtual machines and storage services, or all services provided by a public cloud service provider such as database services provided in the form of a PaaS (Platform as a Service), a SaaS (Software as a Service), and a FaaS (Function as a Service) providing features only.

Client servers 3100 are coupled by the client network 6000, and examples of the coupling include a LAN (Local Area Network), but the form of coupling is not limited thereto.

The data management server 1500, the application management server 1200, and the storage management server 1700 are coupled by the management network 5000, and examples of the coupling include a LAN, but the form of coupling is not limited thereto.

In the present embodiment, the management network and the client network are separated but may be the same network.

In the present embodiment, the management server 2000, the client servers 3100, the data management server 1500, the application management server 1200, the storage management server 1700, the IT resources 1100, and the public cloud resources 1150 are separated, but, for example, any of the servers can include the IT infrastructure recommendation program.

The management server 2000 manages 1. a flow of data through data processing and data communication by an application, 2. the relation between the application and the volume of a storage destination in which the data handled by the application are stored, and 3. the arrangement of data in a replication of the volume and a physical disk configuring the volume, identifies the relationship among a user of the data, the data, and the data storage destination on the basis of these three pieces of information, displays said relationship, or makes a suggestion as to configuring an IT infrastructure or a cloud service on the basis of said relationship.

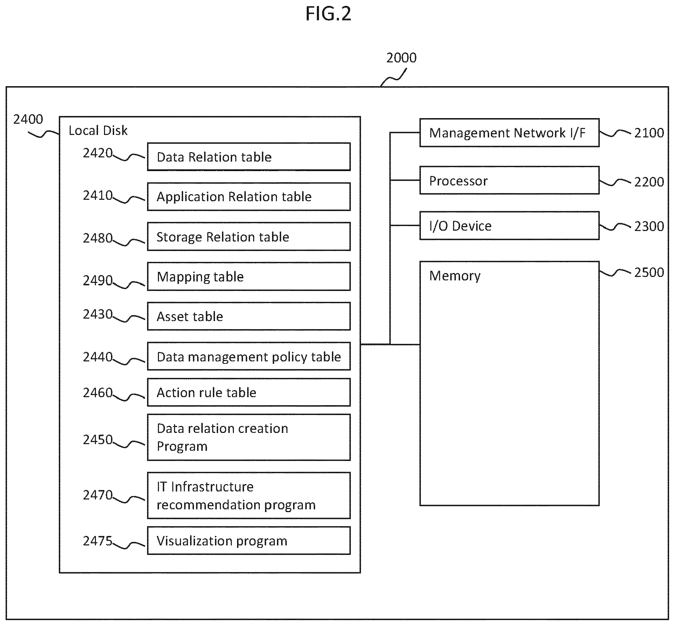

FIG. 2 shows a configuration of the management server 2000 according to the embodiment.

A management network interface 2100 couples the management server 2000 and the management network 5000. An input and output (I/O) device 2300 is a user interface such as a monitor, a keyboard, or a mouse.

A local disk 2400 includes a data relation table 2420, an application relation table 2410, a storage relation table 2480, a mapping table 2490, an asset table 2430, a data management policy table 2440, an action rule table 2460, a data relation creation program 2450, the IT infrastructure recommendation program 2470, and the visualization program 2475.

The IT infrastructure recommendation program 2470 is loaded into a memory 2500 and executed by a processor 2200. Processings of the data relation creation program 2450, the IT infrastructure recommendation program 2470, and the visualization program 2475 are described hereinafter.

The data relation table 2420, the application relation table 2410, the storage relation table 2480, the mapping table 2490, and the asset table 2430 are loaded into the memory 2500 and used by the IT infrastructure recommendation program 2470 and the visualization program 2475. These tables are described hereinafter in detail.

The data management policy table 2440 and the action rule table 2460 are loaded into the memory 2500 and used by the IT infrastructure recommendation program 2470. These tables are described hereinafter in detail.

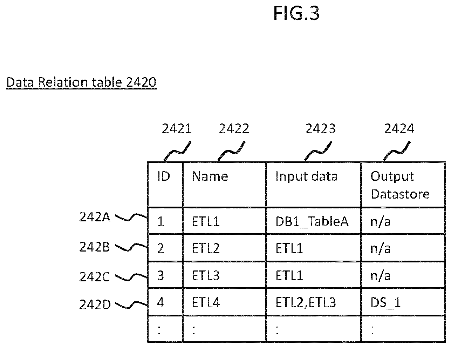

FIG. 3 shows the data relation table 2420. This table is composed of information on data processings managed by the data management server 1500, but may be created by the management server 2000; the effects of the present embodiment do not depend on how the data are created. The data in this table are created by the data relation creation program 2450 acquiring the data from the data management server 1500.

A column 2421 indicates the IDs of the data processings managed by the data management server 1500. A column 2422 indicates the names of the data processings managed by the data management server 1500. A column 2423 indicates the data sources that are received as inputs by the data processings managed by the data management server 1500. A column 2424 indicates datastores in which the data processings managed by the data management server 1500 store output data.

Each row shows information on the corresponding data processing. For example, a row 242A has an ID 1 and a name ETL1 (e.g., ETL processing 1). The data received by this data processing as an input is a table called DB1_Table 1. The data processed and output by this data processing is not stored in the datastore. When the output data is not stored in the datastore, it means that the output data is used as an input of other data processing or output to the user interface.

A row 242B has an ID 2 and a name ETL2 (e.g., ETL processing 2). The data received by this data processing as an input is the output data of the data processing called ETL1. The data processed and output by this data processing 242B is not stored in the datastore.

A row 242D has an ID 4 and a name ETL4 (e.g., ETL processing 4). The data received by this data processing as an input are the output data of the data processings called ETL2 and ETL3, and the data processed and output by the data processing 242D is stored in a datastore DS_1.

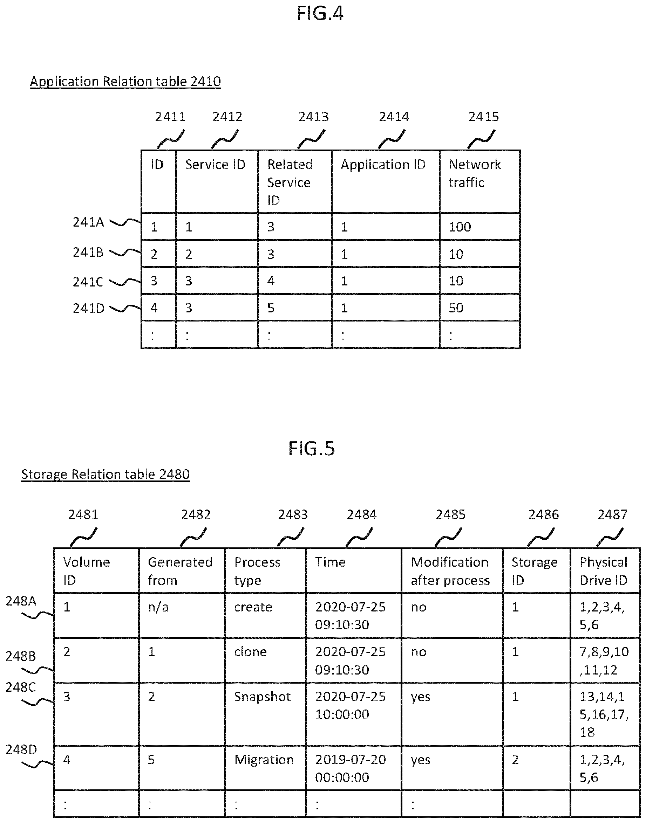

FIG. 4 shows the service relation table 2410. This table is composed of information on applications managed by the application management server 1200, but may be created by the management server 2000; the effects of the present embodiment do not depend on how the data are created. The data in this table are created by the data relation creation program 2450 acquiring the data from the application management server 1500.

A column 2411 indicates the IDs of related information on services. The services each refer to a micro service configuring an arbitrary application, and examples thereof include a container process; however, the effects of the present embodiment do not depend on the implementation of the services. A column 2412 indicates the IDs of the services. A column 2413 indicates the IDs of the services indicated by the column 2412 and the service executing data communication. A column 2414 indicates the IDs of the applications configured by the services indicated by the column 2412. A column 2415 indicates the amount of data communication generated between the services. The unit of the amount of data communication is indicated by the number of packets or the number of bytes.

Each row shows related information on the services. For example, in a row 241A, the ID of the related information on the service is 1, the ID of one of the services is 1, the ID of the other relevant service is 3, the ID of the application configuring both services is 1, and the amount of data communication between both services is 100.

Rows 241A and 241B indicate that different services are related to the same service (ID = 3). Rows 241C and 241D indicate that an arbitrary service (ID = 3) is related to a plurality of services (ID = 4, 5).

FIG. 5 shows the storage relation table 2480. This table is composed of information on storages managed by the storage management server 1700, but may be created by the management server 2000; the effects of the present embodiment do not depend on how the data are created. The data in this table are created by the data relation creation program 2450 acquiring the data from the storage management server 1700.

A column 2481 indicates the IDs of volumes. A column 2482 indicates the IDs of copy source volumes obtained when the volumes are created by copying an arbitrary volume. A column 2483 indicates the types of storage operations in which the volumes are generated. A column 2484 indicates the time points at which the volumes are generated. A column 2485 indicates whether or not write processings occur for the volumes after the volumes are generated. In other words, the column 2485 indicates information that can determine whether or not internal data are edited after the volumes are generated. A column 2486 indicates the IDs of storage apparatuses in which the volumes exist. A column 2487 indicates the IDs of physical drives in which the data stored in the volumes are actually stored.

Each row shows information on the corresponding volume. For example, a row 248A indicates that the ID of the volume is 1, that this volume is not replicated but created newly at 2020-07-25 09:10:30, that data are not written at the time of the creation, and that the data in the volume are recorded in physical drives 1, 2, 3, 4, 5, 6 of the storage having ID = 1. A row 248B indicates that ID = 2 is replicated (cloned) from the volume with ID = 1 at 2020-07-25 09:10:30, that the data is not edited after the volume (ID = 2) is generated, and that the data saved in the volume is recorded in physical drives 7, 8, 9, 10, 11, 12 of the storage with ID = 1.

In addition, as shown in rows 248C, 248D, the storage operations include storage operations such as snapshots, which are in copy formats for recording only the differences from any time point, and volume migration which deletes a volume of a copy source after copying the data inside the volume to another volume. All operations for replicating or moving data saved in the volumes are covered.

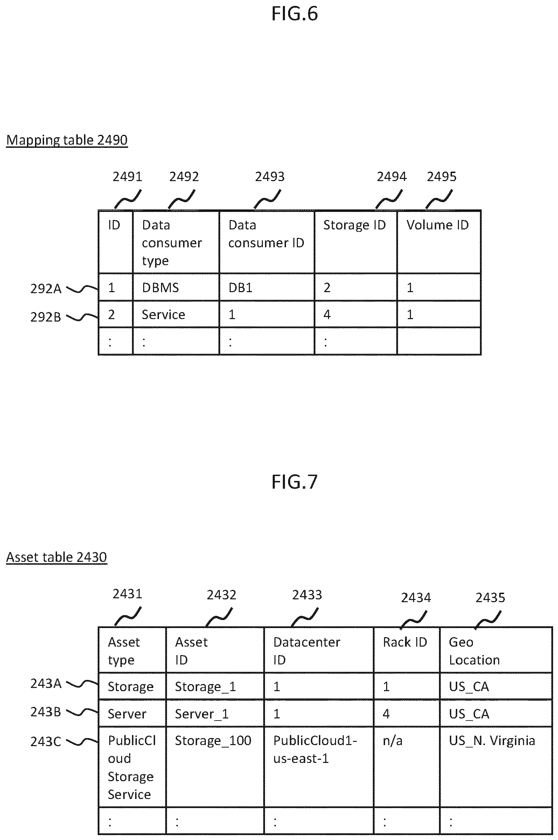

FIG. 6 shows the mapping table 2490. The data in this table are created by the data relation creation program 2450 acquiring the data from the data management server 1500, the application management server 1200, and the storage management server 1700 and associating the data acquired from these servers. However, the data may also be created by the management server 2000; the effects of the present embodiment do not depend on how the data are created.

A column 2491 indicates IDs of information related to the data users and data storage destinations. The data users refer to users who use the data, such as data sources registered in data catalogs managed by the data management server 1500 or the applications managed by the application relation table 2410. However, the data users are not limited to the examples illustrated herein; the effects of the present embodiment do not depend on the implementation of the data users.

A column 2492 indicates the types of the data users. The types of the data users refer to types such as the data sources registered in the data catalogs managed by the data management server 1500, the applications managed by the application relation table 2410, and the like. A column 2493 indicates the IDs of the data users. A column 2494 indicates the IDs of the storages in which the data are stored. A column 2495 indicates the IDs of the volumes inside the storages in which the data are stored.

Each row shows related information of the data users and data storage destinations. For example, a row 249A indicates that the data user is a DBMS type and called DB1 and that the data used by DB1 is stored in the volume with ID = 1 in the storage with ID = 2.

A row 249B indicates that the data user is a service with ID = 1 and that the data used by this service is stored in the volume with ID = 1 in the storage with ID = 4.

FIG. 7 shows the asset table 2430. This table is composed of information on the storages managed by the storage management server 1700, but may be created by the management server 2000; the effects of the present embodiment do not depend on how the data are created. The data in this table are created by the data relation creation program 2450 acquiring the data from the storage management server 1700.

A column 2431 indicates the types of assets. An asset refers to an apparatus in which data are physically stored. Specifically, examples of the assets include storages but are not limited thereto; the effects of the present embodiment do not depend on the types of the apparatuses in which the data are stored.

A column 2432 indicates the IDs of the assets. A column 2433 indicates the IDs of data centers in which the assets are installed. A column 2434 indicates the IDs of racks inside the data centers in which the assets are installed. A column 2435 indicates geographical information of the data centers in which the assets are installed.

Each row shows information on the corresponding asset. For example, a row 243A indicates that the storage asset with ID = 1 is installed in the rack with ID = 1 within the data center with ID = 1 and that this data center exists in US_CA (California, USA).

A row 243B indicates that that a server asset with ID = 1 is installed in the rack with ID = 4 within the data center with ID = 1 and that this data center exists in US_CA (California, USA).

A row 243C indicates that a storage area of a storage service of the public cloud with ID = 100 exists in a region called PublicCloud1-us-east-1 of the public cloud and that this region exists in US_Virginia (Virginia, USA).

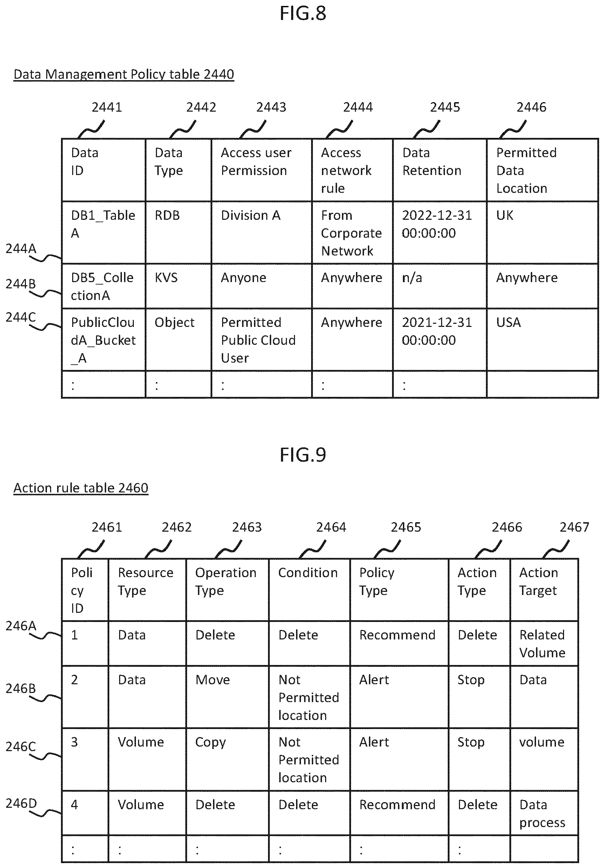

FIG. 8 shows the data management policy table 2440. This table is composed of information managed by the data management server 1500, but may be created by the management server 2000; the effects of the present embodiment do not depend on how the data are created. The data in this table are created by the data relation creation program 2450 acquiring the data from the data management server 1500.

A column 2441 indicates the Ids of data. A column 2442 indicates the types of the data. A column 2443 indicates the information on the users capable of accessing the data. A column 2444 indicates the conditions of the networks capable of accessing the data. A column 2445 indicates the retention periods of the data. A column 2446 indicates the locations where saving of the data is allowed.

Each row shows information on the corresponding data management policy. For example, a row 244A indicates that TableA of DB1 is a RDB (Relational Database), that Division A is accessible only from a corporate network, that the data must be deleted at 2022-12-31 00:00:00, and that the data must be saved in the UK.

A row 244B indicates that CollectionA of DB5 is a KVS (Key Value Store) which can be accessed by anyone from any network, that the data retention period is not set, and that the data can be saved anywhere.

A row 244C indicates that BucketA of PublicCloudA is a datastore in Object format which can be accessible by an authorized user of PublicCloudA from any network, that the data must be deleted at 2021-12-31 00:00:00, and that the data must be saved in the USA.

As illustrated above, the data management policy table 2440 manages the information related to the conditions stipulated by laws and internal rules in regard to the management of the data sources such as those managed in the data catalogs.

The information in this table may be defined beforehand by the data management server 1500 but may be defined by a user in the management server 2000; the effects of the present embodiment do not depend on how the data management policy is defined.

FIG. 9 shows the action rule table 2460. This table is composed of information on actions related to data events managed by the management server 2000. The data in this table are created by the management server 2000.

A column 2461 indicates the IDs of the conditions operated by the IT infrastructure recommendation program 2470 in accordance with arbitrary data events. A column 2462 indicates the targets of data events to which the conditions are applied. A column 2463 indicates the types of the data events to which the conditions are applied. A column 2464 indicates conditions of the data events to which the conditions are applied. A column 2465 indicates expression methods for presenting, to the users, actions executed by the conditions. A column 2466 indicates the types of the actions executed by the conditions. A column 2467 indicates the targets of the actions executed by the conditions.

Each row shows information on the action corresponding to the relevant data event. For example, a row 246A indicates that the ID of the condition of the action is 1, and that this action suggests (2465) that the volume (2467) related to the data be deleted (2466) when an operation for deleting (2463, 2464) the data (2462) takes place.

A row 246B indicates that the ID of the condition of the action is 2, and that this action warns (2465) that the data (2467) are not moved (2466) when an operation for moving (2463) the data (2462) to an unauthorized location (2464) takes place.

A row 246C indicates that the ID of the condition of the action is 3, and that the action warns (2465) that the volume (2467) is not copied (2466) when an operation for copying (2463) the volume (2462) to an unauthorized location (2464) takes place.

A row 246D indicates that the ID of the condition of the action is 4, and that the action suggests (2465) that data processing (2467) related to the volume be deleted (2466) when an operation for deleting (2463, 2464) the volume (2462) takes place.

As illustrated above, in the action rule table 2460, the rules are defined for detecting data events related to the data management policy stored in the data management policy table 2440, and suggesting and warning the actions that protect the data management policy.

The information in this table may be defined beforehand or defined by the users; the effects of the present embodiment do not depend on how the action rules are defined.

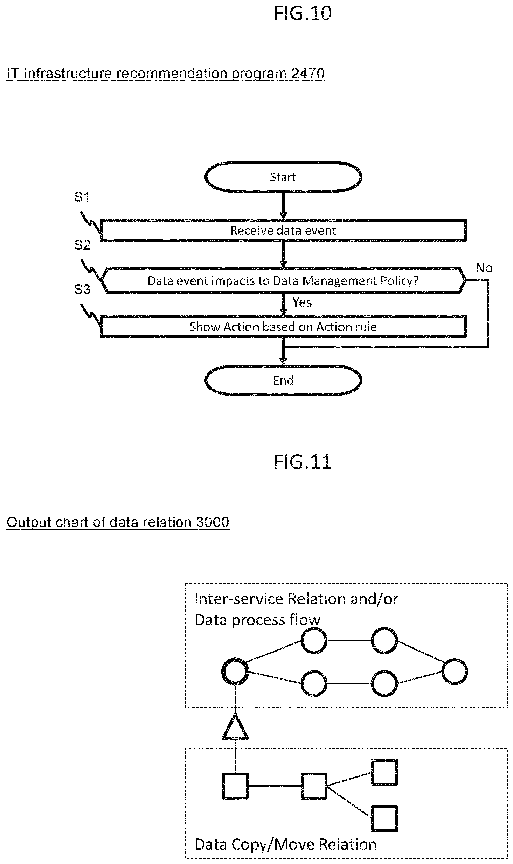

FIG. 10 is a flowchart showing an entire operation of the management server 2000 executed by the IT infrastructure recommendation program 2470.

FIG. 10 shows a flow in which the IT Infrastructure recommendation program 2470 receives an event related to data and presents an appropriate action when this event affects the data management policy.

In S1, the IT infrastructure recommendation program 2470 receives a data event, starts processing, and proceeds to S2. Examples of an issuer of the data event include the data management server 1500, the application management server 1200, the storage management server 1700, and specifically, the contents described in 2462, 2463, 2464 of the action rule table 2460 in FIG. 9.

In S2, the IT infrastructure recommendation program 2470 determines whether or not the data event received in S1 affects the data management policy. Specifically, the IT infrastructure recommendation program 2470 determines whether or not the data event matches the conditions described in the action rule table 2460. In a case where the data event matches the conditions, the IT infrastructure recommendation program 2470 proceeds to S3. Four examples are described hereinafter using the action rule table 2460.

When a deletion event for deleting arbitrary data is received in S1, the IT infrastructure recommendation program 2470 determines that the event can be applied to the conditions of 246A of the action rule table 2460 and affects the data management policy.

Also, in a case where a migration event for moving data is received in S1, the IT infrastructure recommendation program 2470 determines that the event can be applied to the conditions of 246B of the action rule table 2460 and determines whether a data destination is an authorized location or not, with reference to 2446 of the data management policy table 2440. As a result of the determination, in a case where the data are moved to an unauthorized location, it is determined that the data management policy is affected.

In addition, in a case where a copy event for copying a volume is received in S1, the IT infrastructure recommendation program 2470 determines that the event can be applied to the conditions of 246C of the action rule table 2460 and determines whether a copy destination of the volume is an authorized location or not, with reference to 2446 of the data management policy table 2440. As a result of the determination, in a case where the volume is copied to an unauthorized location, it is determined that the data management policy is affected.

In a case where a deletion even for deleting an arbitrary volume is received in S1, the IT infrastructure recommendation program 2470 determines that the deletion event can be applied to the conditions of 246D of the action rule table 2460 and that the data management policy is affected.

As illustrated above, in S2, whether the conditions of the action rule table 2460 are met or not is determined by looking at the data relation table 2420, the application relation table 2410, the storage relation table 2480, the mapping table 2490, the asset table 2430, and the data management policy table 2440.

In S3, the IT infrastructure recommendation program 2470 displays an action presented to the user. Specifically, with reference to the action rule table 2460, the IT infrastructure recommendation program 2470 acquires a method of presenting the action to the user and the content to be presented, and presents the method and content to the user. Three examples are described hereinafter using the action rule table 2460.

First, in a case where the condition of 246A is met in S2, the IT infrastructure recommendation program 2470 recommends that the user delete the volume related to the target data. To search for the volume related to the target data, first, the mapping table 2490 is referenced, and the storage and the volume in which the target data are stored are specified. Next, the storage relation table 2480 is referenced, to specify a volume related to the volume. In so doing, a physical location of the device in which the data are stored may be presented as a deletion target by referring to 2487 of the storage relation table 2480 and the asset table 2430. Depending on the details of laws and regulations and audits, such information becomes effective when a physical device in which the data are stored needs to be destroyed when the data are deleted.

Next, in a case where the condition of 246B is met in S2, the IT infrastructure recommendation program 2470 warns to stop the data migration.

Further, in a case where the condition of 246C is met in S2, the IT infrastructure recommendation program 2470 warns to stop the copying of the volume.

Then, in a case where the condition of 246D is met in S2, the IT infrastructure recommendation program 2470 notifies the user of that the data processing related to the target volume may be invalidated and recommends the user to delete the data processing accordingly. To search for the data processing related to the target data, first, the mapping table 2490 is referenced, and the data or service stored in the target volume is specified. Next, the data relation table 2420 or the application relation table 2410 is referenced, to specify the data processing or service related to said data or service.

As illustrated above, in S3, when the condition of S2 is met, the information to be presented to the user is determined with reference to the data relation table 2420, the application relation table 2410, the storage relation table 2480, the mapping table 2490, the asset table 2430, the data management policy table 2440, and the action rule table 2460.

FIG. 11 is an example of a chart made visible by the visualization program 2475. A chart 3000 is a chart for showing the association between the action presented to the user by the IT infrastructure recommendation program 2470 and the data displayed at the same time.

The circular symbols at the top of the chart 3000 each indicate a data processing or service relation of the data relation table 2420 or the application relation table 2410, and each circular symbol indicates the data processing or service.

The triangular symbol in the middle of the chart indicates a server that executes the data processing or a server that executes the service. As to the row 292A of the mapping table 2490, the triangular symbol indicates the server that operates the DBMS, the server being indicated by 243B or the like of the asset table 2430.

The square symbols at the bottom of the chart each indicate the relation between the storage and the volume of the storage relation table 2480.

The information shown above are created based on the data relation table 2420, the application relation table 2410, the storage relation table 2480, and the mapping table 2490, and are displayed to the user at the same time as the content to be presented of 246A or 246D of the action rule table 2460 by means of the method illustrated in the diagram, so that the user can visually understand the related volume or data processing, helping to determine the pros and cons of the action with respect to the content to be presented.

According to the present embodiment configured as described above, the usage status of data in the storage apparatus having the hybrid configuration can be ascertained promptly.

The foregoing embodiment has described the configurations in detail in order to explain the present invention in an easy-to-understand manner, and the present invention is not necessarily limited to an embodiment including all of the described configurations. In addition, part of the configurations of the foregoing embodiment can be added to, deleted, or replaced with other configurations.

Each of the above configurations, functions, processing units, processing means, and the like may be realized by hardware by designing a part or all of these components with, for example, an integrated circuit. The present invention can also be realized by a program code of software that realizes the functions of the embodiment. In this case, a storage medium in which the program code is recorded is provided to a computer, and a processor equipped in the computer reads out the program code stored in the storage medium. In this case, the program code itself that is read from the storage medium realizes the functions of the embodiment described above, and the program code itself and the storage medium storing the program code therein constitute the present invention. Examples of the storage medium for supplying such program code include a flexible disk, a CD-ROM, a DVD-ROM, a hard disk, an SSD (Solid State Drive), an optical disk, a magneto-optical disk, a CD-R, a magnetic tape, a nonvolatile memory card, and a ROM.

Moreover, the program code that realizes the functions described in the present embodiment can be implemented in a wide range of programs or script languages such as assembler, C/C++, perl, Shell, PHP, Java^{®}, and Python.

In the embodiment described above, the control lines and information lines show what is considered necessary for explanation, and do not necessarily indicate all the control lines and information lines in the product. All configurations may be intercoupled together.

## Claims

1. A management computer coupled to a host computer accessed from a client, an IT infrastructure, and a first storage apparatus in which data are stored, wherein
the management computer includes a processor, and
the processor is configured to identify a relation among a data user that uses the data, the data, and the IT infrastructure on the basis of data management information in the first storage apparatus and IT infrastructure management information in the IT infrastructure, and present the identified relation to the client.

2. The management computer according to claim 1,
wherein the processor is configured to present the data and a configuration/operation plan of the IT infrastructure to the client on the basis of the identified relation.

3. The management computer according to claim 1,
wherein the data management information is a table that describes a relation between the data user and the data used by the data user, or a relation between a plurality of the data users communicating the data.

4. The management computer according to claim 1,
wherein the IT infrastructure management information is a table that describes a relation among the data user, the IT infrastructure, and a volume of the IT infrastructure.

5. The management computer according to claim 1,
wherein the IT infrastructure is a second storage apparatus.

6. The management computer according to claim 1,
wherein
the management computer is configured to receive a data event, and
the processor is configured to determine whether the data event affects a data management policy or not, and present the data and a configuration/operation plan of the IT infrastructure to the client on the basis of the determination result.

7. The management computer according to claim 6,
wherein the data event is a delete instruction for deleting the data.

8. The management computer according to claim 6,
wherein the data event is a move instruction for moving the data.

9. The management computer according to claim 6,
wherein the data event is a copy instruction for copying a volume of the IT infrastructure and the first storage apparatus.

10. The management computer according to claim 6,
wherein the data event is a delete instruction for deleting a volume of the IT infrastructure and the first storage apparatus.

11. The management computer according to claim 6,
wherein when the data event is the delete instruction for deleting the data or the delete instruction for deleting a volume of the IT infrastructure and the first storage apparatus, the processor is configured to determine that the data event affects the data management policy and issue a suggesting to delete of a volume to the data or a data processing related to the volume.

12. The management computer according to claim 6,
wherein when the data event is a migration instruction for moving data to an unauthorized location, the processor is configured to determine that the data event affects the data management policy and issue a warning to stop the data migration.

13. The management computer according to claim 6,
wherein when the data event is a copy instruction for copying a volume to an unauthorized location, the processor is configured to determine that the data event affects the data management policy and issue a warning to stop the copying of the volume.

14. The management computer according to claim 6,
wherein the data management policy is a table that describes a relation among the data, a user or a network capable of accessing the data, and a location where saving of the data is allowed.

15. A data management method by a management computer coupled to a host computer accessed from a client, an IT infrastructure, and a first storage apparatus in which data are stored,
the method comprising identifying a relation among a data user that uses the data, the data, and the IT infrastructure on the basis of data management information in the first storage apparatus and IT infrastructure management information in the IT infrastructure, and presenting the identified relation to the client.
